# EUROPEAN PATENT SPECIFICATION

(11) **EP 3 002 670 B1**
(45) Date of publication and mention of the grant of the patent: **03.10.2018**
(21) Application number: 15182814.2
(22) Date of filing: 27.08.2015
(51) Int. Cl.: G06F 3/0488, G06F 3/0485, G06F 3/0482

(54) **CONTENT SEARCH APPARATUS AND METHOD FOR SEARCHING CONTENT**
INHALTSSUCHVORRICHTUNG UND VERFAHREN ZUR INHALTSSUCHE
APPAREIL DE RECHERCHE DE CONTENU ET PROCÉDÉ DE RECHERCHE DE CONTENU

(30) Priority: 30.09.2014 KR 20140131469
(43) Date of publication of application: 06.04.2016
(73) Proprietor: Samsung Electronics Co., Ltd., Gyeonggi-do 16677 (KR)
(72) Inventor: KIM, Ji-hyae, Seoul (KR); KIM, Jung-geun, Gyeonggi-do (KR); SO, Yong-jin, Gyeonggi-do (KR)
(74) Representative: Hewett, Jonathan Michael Richard

(56) References cited:
- EP-A2- 2 204 721
- WO-A2-2013/010155
- US-A1- 2014 082 554

## Description

The present invention relates to a content searching technique and a content searching apparatus configured to search content according to an input, such as a touch input, and a content searching method thereof.

With the emergence of electronic apparatuses such as smart phones, interface techniques for easily searching content stored in electronic apparatuses have been developed.

A user interface technique provided in mobile apparatuses having touch screens in the related art is a method of displaying a directory structure of stored files. A user may search content stored in a higher directory or a lower directory by performing a touch input to a displayed directory title.

An application for reproducing music content automatically searches for and provides music content stored in an electronic apparatus in real time. In this case, a user doesn't have to search proactively for the content, thereby increasing user convenience.

However, in the case of searching and showing all the music content stored in an electronic apparatus, when an amount of stored content increases, finding content to be reproduced from the searched content becomes difficult. Therefore, there is needed a technique to show the searched content to the user in a neat and organized manner.

Furthermore, according to conventional techniques, when the user wants to find content related to the music content currently being reproduced, the user has to input a search query to a streaming service server and perform the search himself/herself, which is inconvenient.

Therefore, there is needed a user interface technique capable of providing searched content to the user in a neat and organized manner, and capable of easily searching other content related to the content searched by the user.

Therefore, an aspect of various exemplary embodiments is to resolve the aforementioned problems, that is, to provide a user interface technique capable of providing searched content to the user in a neat and organized manner, and capable of easily searching other content related to the content searched by the user.

US 2014/082554 presents a method and electronic device for displaying categories.

In a first aspect of the invention, a content searching method is presented by claim 1, and a content searching apparatus is presented by claim 13.

Optional features are set out in the dependent claims.

The above and/or other aspects of one or more exemplary embodiments will be more apparent by describing certain exemplary embodiments with reference to the accompanying drawings, in which:
FIG. 1 is a block diagram illustrating a configuration of a content searching apparatus according to an exemplary embodiment;
FIGs. 2 to 8 are views for explaining operations of a content searching apparatus 100 according to various exemplary embodiment;
FIG. 9 is a view for explaining operations of a content searching apparatus when a first menu item is selected according to an exemplary embodiment;
FIG. 10 is a view for explaining operations of a content searching apparatus when a second menu item is selected according to an exemplary embodiment; and
FIG. 11 is a flowchart of a content searching method according to various exemplary embodiments.

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of various exemplary embodiments. However, one or more exemplary embodiments can be practiced without those specifically defined matters. Also, well-known functions or constructions are not described in detail since they would obscure the application with unnecessary detail.

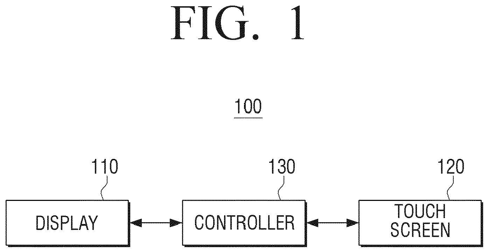

FIG. 1 is a block diagram illustrating a configuration of a content searching apparatus according to an exemplary embodiment.

Referring to FIG. 1, the content searching apparatus 100 includes a display 110, touch screen 120, e.g., a touch screen unit, and controller 130.

The content searching apparatus 100 has one or more displays. The content searching apparatus 100 is an apparatus configured to execute an application or display content, and may be embodied as, as non-limiting examples, at least one of a tablet, a personal computer (PC), a Portable Multimedia Player (PMP), a Personal Digital Assistant (PDA), a smart phone, a mobile phone, a digital photo frame, a digital sign, a television, such as a digital television, and a kiosk.

The display 110 is configured to display a screen that includes at least one object. An object refers to a partial image corresponding to a certain function of the content searching apparatus 100 or a content displayed by the content searching apparatus 100. The display 110 may display an image that includes at least one object.

The object may be at least one of an application icon, a content icon, a thumbnail image, a folder icon, a widget, a list item, a menu, and a content image. However, there are merely examples, and the object is not limited thereto. An application icon is an icon that executes an application included in the content searching apparatus 100 when selected. A content icon is an icon that reproduces content when selected. A thumbnail image is an image reduced to a smaller size such that it may be seen at a glance. A folder icon is an icon that displays files included in a folder when selected. A widget is an icon that provides a user interface such that an application icon may be executed right away without going through numerous steps of selecting menus. A list item displays files in a list format. A menu image displays selectable menus.

The controller 130 controls the display 110 to display an object. In response to a drag input in a direction of a perimeter of the object, the controller 130 may sequentially select or reproduce content mapped to positions of the perimeter of the object. The drag input may be sensed through the touch screen 120.

The object may be a circular object and may have the shape of a wheel. In response to a drag input in a circumferential direction being received on a circular object, the controller 130 may sequentially select or reproduce content mapped to positions of the circumference of the circular object.

The display 110 includes a scaler, a frame rate converter, a video enhancer, and a display module. The scaler adjusts a screen ratio of an image. The video enhancer removes deterioration or noise from the image, and stores processed image data in a frame buffer. The frame rate converter adjusts a frame rate, and the image data of the frame buffer is transmitted to a display module according to the set frame rate.

The display module is a circuit configuration that outputs an image to a display panel, and the display module may include a timing controller, a gate driver, a data driver, and a voltage driver.

The timing controller generates a gate control signal (injection control signal) and a data control signal (data signal), realigns the input R, G, B data, and supplies the same to the data driver. The gate driver applies a gate on/off voltage (Vgh/Vgl) provided from the voltage driver to the display panel according to the gate control signal generated by the timing controller. The data driver completes scaling according to the control signal generated by the timing controller, and inputs the RGB data of the image frame into the display panel. The voltage driver generates and transmits a driving voltage for each of the gate driver, data driver, and display panel.

The display panel is configured to display an image according to an applied driving signal. The display panel may be, as non-limiting examples, at least one of an Organic Light Emitting Diodes (OLED) panel, a Liquid Crystal Display (LCD) panel, a Plasma Display Panel (PDP), a Vacuum Fluorescent Display (VFD), a Field Emission Display (FED), and an Electro Luminescence Display (ELD). The display panel may be an emitting type display or a reflective type display (E-ink, P-ink, Photonic Crystal), as non-limiting examples. The display panel may be embodied as a flexible display, a transparent display, and the like.

The touch screen 120 is a configuration for receiving a touch input for selecting an object displayed on a screen. The touch screen 120 includes a touch panel for sensing a user touch. The touch panel may be attached to the aforementioned display 110, or may be included as a part of the display 110. When a user touches the touch panel, the touch sensor may sense the user touch and detect a position (coordinate) of the user touch. The touch sensor may also detect an intensity of the user touch. A type of touch may be determined based on a touch duration, and whether or not there is a successive touch input. A case where a touch for an object is initiated and the touch is terminated without a predetermined time is defined as merely a touch input, and a case where a touch for an object is initiated and a successive touch is made adjacently to the initial touch position within a predetermined time is defined as a drag input. The drag input accompanies a touch, and thus may be called a drag input.

The touch screen 120 may use one of an electrostatic method or piezoelectric method to detect a user's touch. The touch screen 120 may use another method, for example, an image sensing method, to sense the user's touch.

The touch screen 120 can receive a drag input for the circular object displayed on the screen and processes the same. When a drag input in a circumferential direction is received with the circular object being touched, the touch screen transmits a sensing value to the controller 130. The sensing value may be transmitted in real time.

The content searching apparatus 100 may have a touch pad instead of the touch screen 120. The touch pad may perform similarly to a touch screen. The touch pad may be separated from the display 110 and form a separate interface. A touch screen 120 may be attached to the screen of the display 110 and a user may directly perform a touch in a position of the object being displayed on the screen, whereas, with a touch pad, the user may perform a touch in a position corresponding to the position of the object in a separate interface. The touch pad may be manipulated separately from the content searching apparatus 100 and may be portable.

The controller 130 controls an overall operation of the content searching apparatus 100.

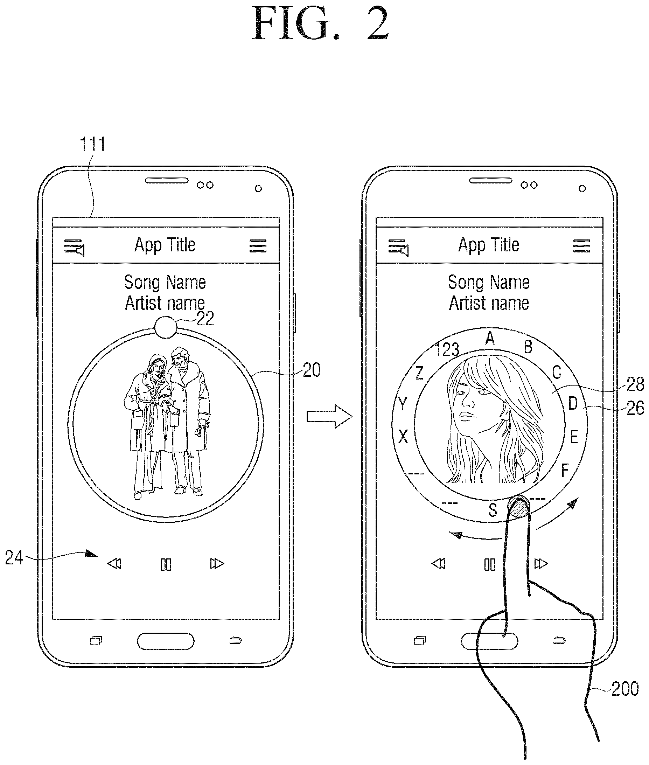

FIG. 2 is a view for explaining operations of a content searching apparatus 100 according to an exemplary embodiment.

The controller 130 maps at least one content to a circumference of the circular object. More specifically, the controller 130 maps different content to different areas of the circumference of the circular object. A plurality of content may be mapped to the circumference of the circular object, and the content may be mapped to the circumference of the circular object in a predetermined order (for example, an order based on when the content was produced). When a touch input is received in one area of the circular object, the controller 130 reproduces or selects a content that corresponds to the one area. The touch input may be made by a user object 200. The user object 200 may be various objects such as, as non-limiting examples, a stylus pen or a finger, that may be sensed by the touch screen 120.

As illustrated in FIG. 2, the controller 130 controls the display 110 to display the circular object 20 on the screen 111. The controller 130 may control the display 110 to further display a scroll bar 22 and a control button 24. The scroll bar 22 is a means for easily searching the content mapped to the circumference of the circular object. That is, when a drag input along the circumference of the object 20 is received with the scroll bar 22 being touched, the controller 130 may search the content according to the drag input. Herein, the scroll bar 22 moves along the circumference of the circular object 20 according to the drag input. However, a circular object 20 may be displayed without the scroll bar 22. When a user touch input is received on the circular object 20, the controller 130 selects or reproduces a mapped content in a position where the user touch input is received. When a touch input for the control button 24 is received, the controller 130 may search a reproduction point of the content currently being reproduced or may pause the reproduction of the content currently being reproduced. When the content is a music content, the controller 130 may control such that a title and artist name is displayed on the screen as illustrated in FIG. 2.

As illustrated in the right portion of FIG. 2, when a user's touch input is input to the circumference of the circular object 20, the controller 130 may display information related to least one content mapped to the circumference of the circular object 20 on the circumference of the circular object 20. The information related to at least one content may be at least one of category information where the at least one content belongs to and the title information of the at least one content. For example, the controller 130 may display a first character of the title of the at least one content on the circumference of the circular object 20 as illustrated in FIG. 2. Furthermore, the first character may be displayed in a predetermined order (for example, in alphabetic order). There is no limitation to the format of display of the information. That is, it may be displayed in various formats such as an image, letter, icon, and the like.

The controller 130 may control the display 110 to display the content selected by the user's touch input or the category where the content belongs to in a highlighted manner. For example, the letters of the content selected by the user's touch input or the category where the content belongs to may be enlarged and displayed, or may be displayed in colors different from other objects.

When a content is selected by a user's touch and drag input (or by only a touch input) as illustrated in FIG. 2, the controller 130 may control the display 110 to display an image 28 of the content corresponding to a touch position by the input. When the content is a music content, an image representing a music album may be displayed.

When a touch and a following drag input is made along the circumference of the circular object 20, the controller 130 may control the display 110 to change the image 28 of the content to correspond to the touch position and display the same.

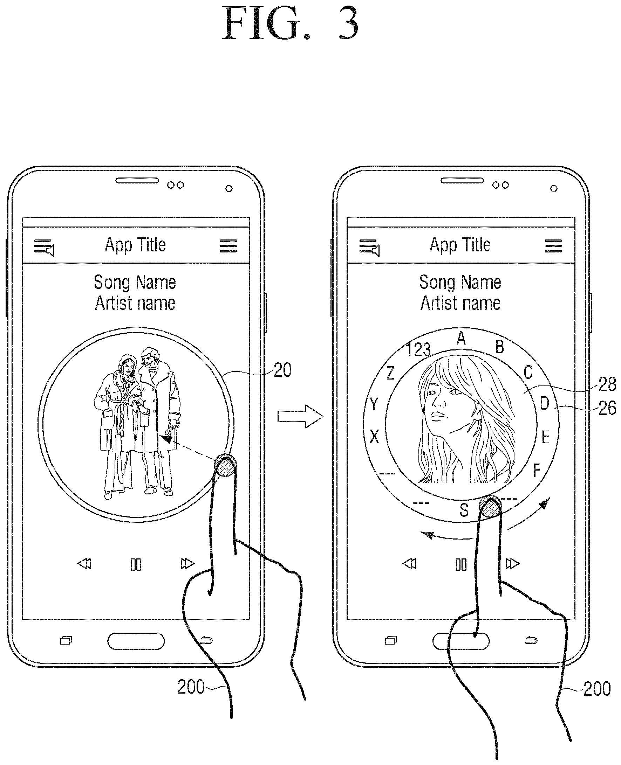

FIG. 3 is a view for explaining operations of the content searching apparatus 100 according to another exemplary embodiment.

According to an exemplary embodiment, the controller 130 may control the display 110 to display the information 26 on the at least one content mapped to the circumference of the circular object 20 only when a drag input in a central direction or external direction, e.g., a radial or approximately radial direction, of the circular object 20 is received as will be described hereinafter.

When a drag input in a central direction of the circular object is received, the controller 130 may map the at least one content to the circumference of the circular object. The at least one content may be a content related to a content currently being reproduced or a content selected. For example, the content may be a content belonging to a same folder, category or album as the content currently being reproduced.

As illustrated in FIG. 3, when a drag input in a central direction of the circular object 20 is received, the controller 130 may map at least one content to the circumference of the circular object 20. Alternatively, when a drag input is input in an external direction of the circular object 20, the controller 130 may map at least one content to the circumference of the circular object 20. When a mapping is made, the controller may control information 26 on the mapped content to be displayed on the circumference of the circular object 20. When there is a user's touch or a drag input on the circumference of the circular object 20, the controller 130 may control a content corresponding to the circumference position of the circular object 20 where there is a user's touch to be reproduced or selected, and that an image 28 of the content to be displayed on the screen.

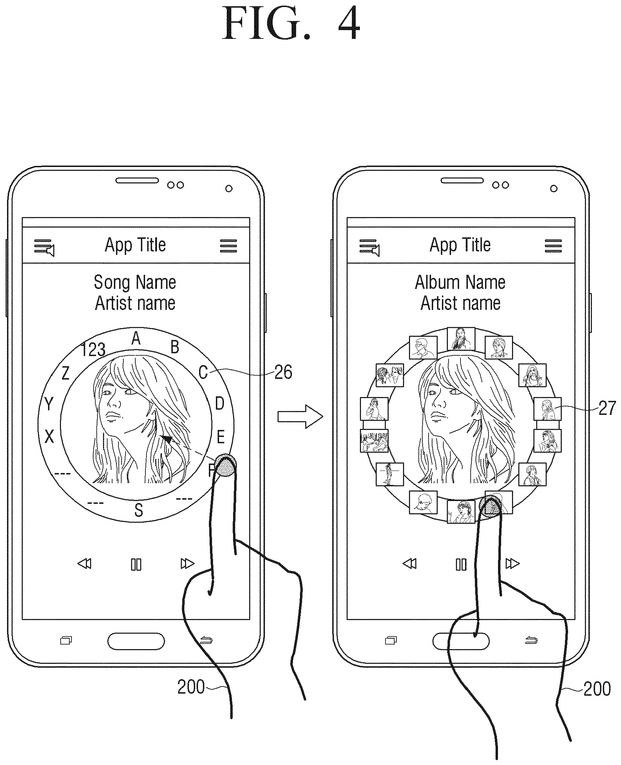

FIG. 4 is a view for explaining operations of the content searching apparatus 100 according to another exemplary embodiment.

When a drag input in a central direction or external direction of the circular object is received through the screen unit 120, the controller 130 may change at least one content mapped to the circumference of the circular object.

When the content mapped to the circumference of the circular object is changed, there may be a higher/lower relationship between the mapped content before the change and the mapped content after the change. That is, the content before the change may be a higher or lower level content with respect to the content after the change. For example, when a drag input in a central direction of the circular object is input through the touch screen 120, music content mapped to the circumference of the circular object may be changed to a category, album, or folder.

When a touch is terminated in a case where a category, a folder, or an album of the content is mapped, the controller 130 selects a category, folder, or album, and reproduces content included in the category, folder, or album in a predetermined order. The controller 130 may control the display of information 27 on the category, album, or folder where the content belongs to on the circumference of the circular object as illustrated in FIG. 4. In this case, the information on the album, category, or folder displayed on the circumference may be displayed based on a time of when the content was produced.

When a drag input in a central direction of the circular object is received through the touch screen 120 with the category, album, or folder being mapped on the circumference of the circular object, the controller 130 may map a higher category, e.g., an album collection (album of a same artist) or a higher-level folder, to the circumference of the circular object. For example, when a drag input in a central direction of the circular object is received with a music album mapped to the circumference of the circular object, the controller 130 may map a music category, movie category, and game category to the circumference of the circular object. Furthermore, the controller 130 may control a display of the mapping information.

When a drag input along the circumference of the circular object is received through the touch screen 120, the controller 130 may reproduce or select the content mapped to the circumference of the circular object according to the touch position of the drag input.

When at least one content mapped to the circumference of the circular object is changed, the controller 130 may control the display 110 to display the information related to the at least one content (or, for example, category, folder, or album) newly mapped to the circumference of the circular object on the circumference of the circular object. That is, when a user's touch input is received on the circumference of the circular object, the information related to the at least one content mapped to the circumference of the circular object may be displayed on the circumference of the circular object, but unlike this, when the at least one content mapped to the circumference of the circular object is changed, the information related to the at least one content newly mapped to the circumference of the circular object may be displayed on the circumference of the circular object.

The information on the at least one content may correspond to a title of the at least one content. There is no limitation to the format of displaying the information. As, non-limiting examples, the information may be displayed in various formats, such as an image, a letter, an icon, and the like.

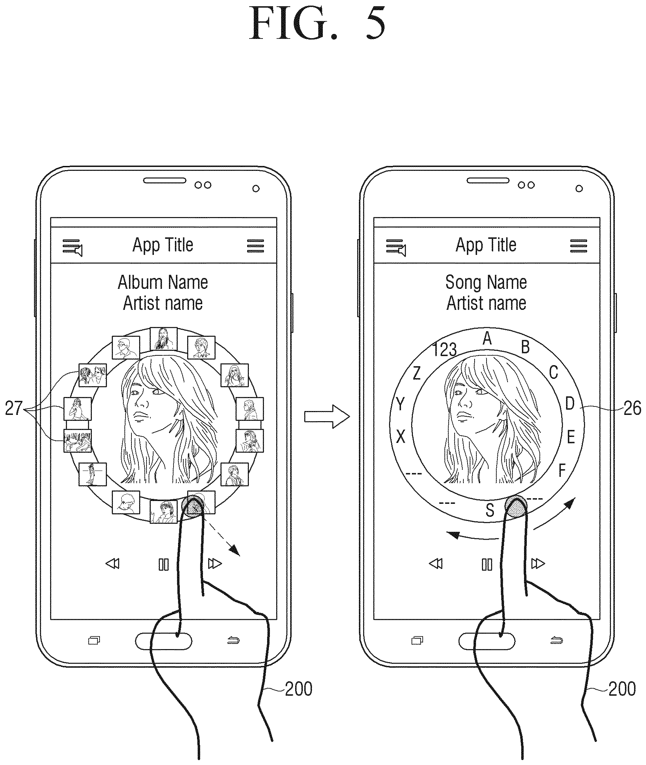

FIG. 5 is a view for explaining operations of a content searching apparatus 100 according to another exemplary embodiment.

When a drag input in an external or central direction of the circular object is received, the controller 130 may change the at least one content mapped to the circumference of the circular object to content that was mapped to the circumference of the circular object at a previous step. That is, when a drag input in a direction opposite to the drag direction by the touch performed at the previous step before the content was mapped to the circumference of the circular object is received, the controller 130 reverses what is mapped to the circumference of the circular object back to the previous step. For example, the controller 130 may map a plurality of albums including the album where the content is included to the circumference of the circular object. When a drag input in an external direction of the circular object is received, the controller 130 may map the content that was mapped at the previous step to the circumference of the circular object again instead of mapping the albums to the circular object. Otherwise, the controller 130 may map the content included in the album corresponding to the circumference of the circular object where the drag input was performed to the circumference of the circular object.

In the embodiment of FIG. 5, with the plurality of albums mapped to the circumference of the circular object, a drag input in an external direction of the circular object that is in an opposite direction to a direction of a drag input of the previous step is received, and the controller 130 mapped a music content of an album where the drag input in the external direction was performed to the circumference of the circular object.

When the at least one content mapped to the circumference of the circular object is changed, the controller may control the display 110 to display the information 26 on the at least one content (or, for example, category, folder, or album) newly mapped to the circumference of the circular object on the circumference of the circular object. That is, when a user's touch input is received in the circumference of the circular object as in the aforementioned embodiment, the information 26 on the at least one content mapped to the circumference of the circular object may be displayed on the circumference of the circular object, but instead, as long the at least one content mapped to the circumference of the circular object is changed, the information 26 on the at least one content newly mapped to the circumference of the circular object may be displayed on the circumference of the circular object

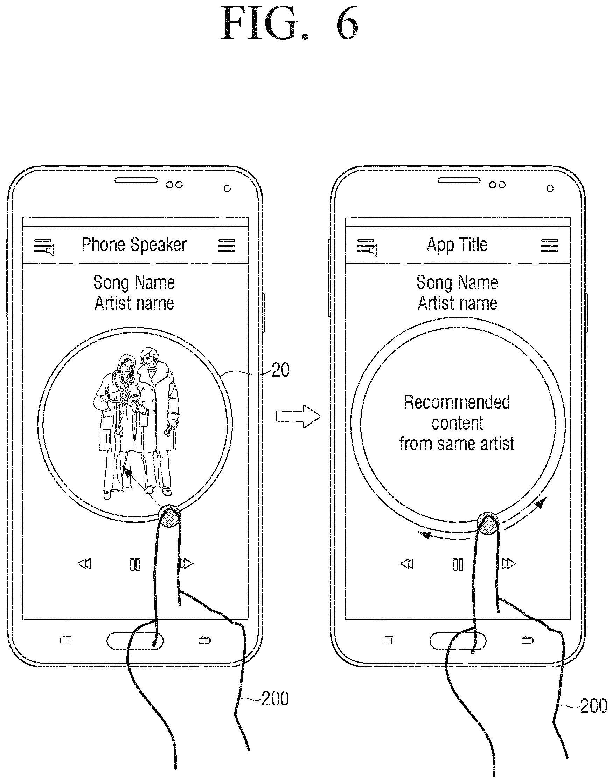

FIG. 6 is a view for explaining operations of the content searching apparatus 100 according to another exemplary embodiment.

As illustrated in FIG. 6, when a drag input in a central direction of the circular object 20 is received, the controller 130 may change the at least one content mapped to the circumference of the circular object 20 to another content by a same artist name as the content currently being reproduced. Therefore, the user may easily switch to another content of the same artist of the content currently being reproduced by a simple touch manipulation on the circular object 20.

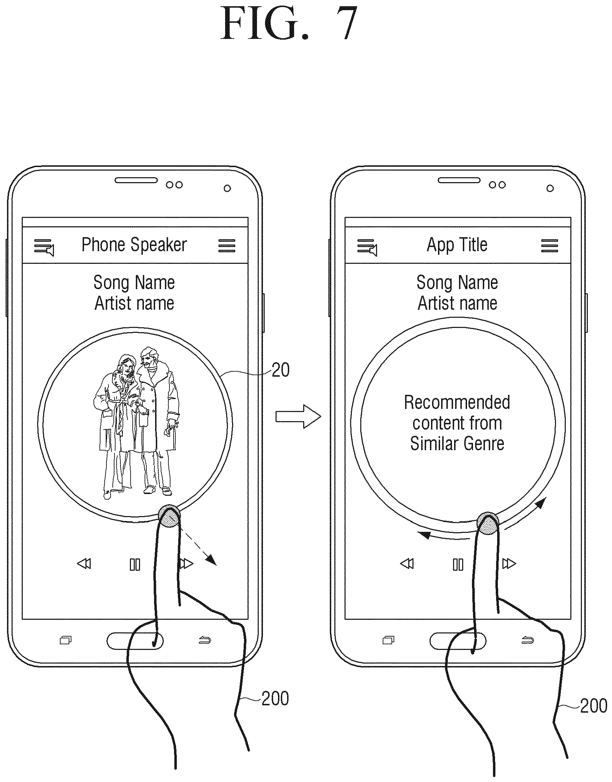

FIG. 7 is a view for explaining operations of the content searching apparatus 100 according to another exemplary embodiment.

As illustrated in FIG. 7, when a drag input in an external direction of the circular object 20 is received, the controller 130 may change the at least one content mapped to the circumference of the circular object to another content of a similar genre as the content currently being reproduced. Therefore, the user may easily switch to another content of a genre that is similar to the content currently being reproduced by a simple touch manipulation.

FIGs. 6 and 7 illustrate non-limiting exemplary embodiments. According various exemplary embodiments, when a drag input in a central or external direction of the circular object 20 is received, the controller 130 may map another content related to the content currently being reproduced to the circumference of the circular object.

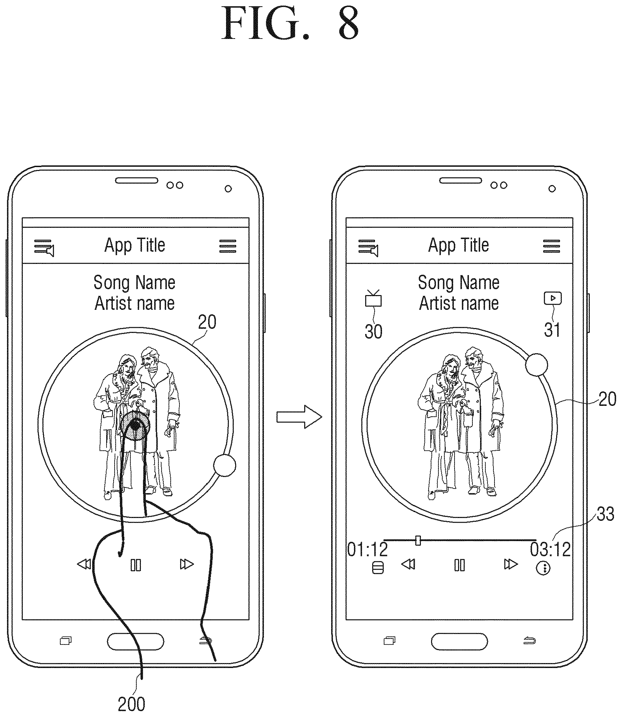

FIG. 8 is a view for explaining operations of a content searching apparatus 100 according to another exemplary embodiment.

In the content searching apparatus 100, when a tap input is received through the touch screen 120, the controller 130 may control the display 110 to display a menu object related to the content currently being reproduced.

In FIG. 8, when a tap input by a user object 200 is received, the controller 130 may control the display 110 to display a first menu item 31 and second menu item 30 related to the content currently being reproduced.

The first menu item 31 is a menu item for searching videos related to the content currently being reproduced, and the second menu item 30 is a menu item for reproducing the content currently being reproduced in an external apparatus.

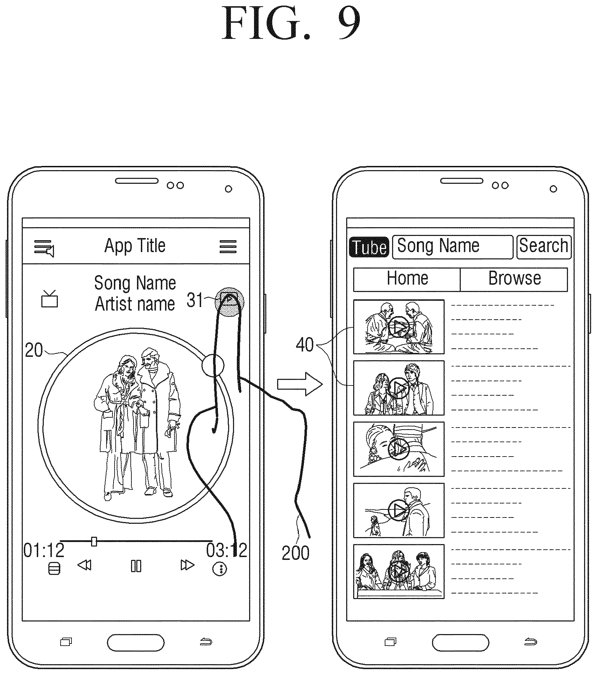

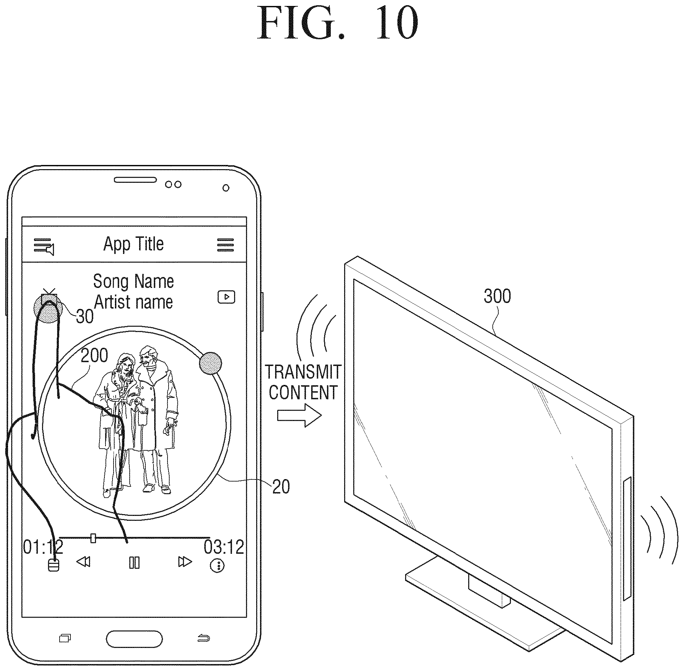

FIG. 9 is a view for explaining operations of the content searching apparatus when the first menu item is selected, and FIG. 10 is a view for explaining operations of the content searching apparatus when the second menu item is selected.

As illustrated in FIG. 9, when the first menu item 31 is selected, the controller 130 controls a search of videos related to the content currently being reproduced and controls the display 110 to display a list showing the search result. Therefore, the user may easily search video information related to the content currently being reproduced. The search may be performed over the internet, but it is also possible to search content stored in the content searching apparatus 100 or in an external apparatus.

In order to search content related to the content currently being reproduced, the storage may store metadata regarding all content. The controller 130 provides information related to other content related to the content currently being reproduced with reference to the metadata regarding the content.

As illustrated in FIG. 10, when the second menu item 30 is selected, the controller 130 may transmit the content currently being reproduced to an external apparatus 300 or transmit information corresponding to the content currently being reproduced to the external apparatus 300, and reproduce the content currently being reproduced or a content that is the same as the content currently being reproduced through the external apparatus 300. When the controller 130 transmits the information corresponding to the content currently being reproduced to the external apparatus 300, the external apparatus 300 searches for content having information corresponding to the information corresponding to the content currently being reproduced and reproduces the same.

The content mapped to the circumference of the circular object may be a content stored in an external apparatus, a content stored inside the content searching apparatus 100, or a content existing on the internet.

Therefore, it is possible to select the first menu item 31 and search the content stored in the external apparatus 300, and select a wanted content from the searched content, and reproduce the selected content through the external apparatus 300.

The controller 130 may be implemented as hardware, software, or a combination of hardware and software. The controller 130 may include a central processing unit (CPU), cache memory; an operating system, and a software configuration for performing various functions. According to a system clock, a control command for each component for operation of the content searching apparatus 100 is read in the memory, and according to the read control command, an electrical signal is generated to operate each components of the hardware.

Meanwhile, in order to transceive content or content information to/from the external apparatus, the content searching apparatus 100 may further include a communicator, e.g., a transceiver. A short distance or long distance wired/wireless communication technology may be used for the communicator. Furthermore, the communicator may be connected to various apparatuses or a server through the internet. Various communication techniques, such as Wi-Fi, Bluetooth, NFC, ZigBee, 3G or 4G cellular communication techniques, infrared ray communication, and the like, may be applied by the communicator.

The content searching apparatus 100 may further include a signal processor configured to signal-process an image, and a storage.

The signal processor may form an image frame. The signal processor includes at least one of an A/V decoder, a scaler, a frame rate converter, and a video enhancer. The A/V decoder separates audio and video data and decodes the same. The scaler adjusts the screen ratio of an image where an object is displayed. The video enhancer removes deterioration or noise from an image, and transmits the image to a display unit according to a frequency set up by the frame rate converter.

The storage stores programs for performing the aforementioned functions of the controller 130, or stores various parameters and calculated values needed for mapping the content to the circumference of the circular object and to display the same on the screen. Besides the content files, the storage may store metadata related to content stored in the content searching apparatus 100. The storage may be embodied as various types of record medium such as a compact disk (CD), a digital versatile disk (DVD), a hard disk, a Blu-ray disk, a memory card, universal serial bus (USB) memory stick, and the like.

Hereinafter, a content searching method according to various exemplary embodiments will be explained.

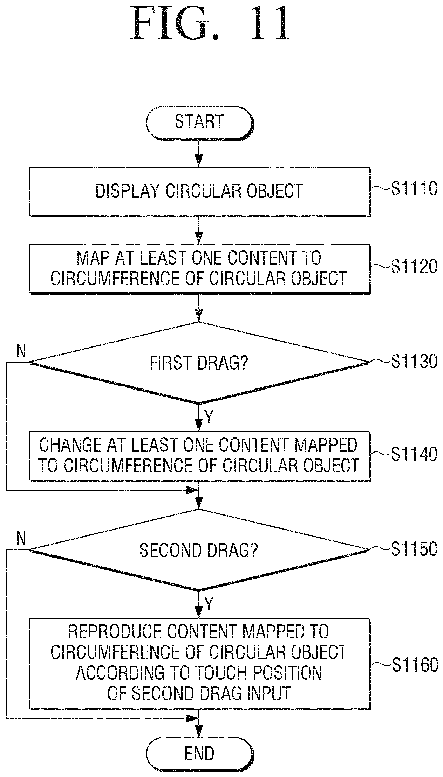

FIG. 11 is a flowchart of a content searching method according to various exemplary embodiments.

Referring to FIG. 11, the content searching method includes: displaying a circular object (S1110); mapping at least one content to a circumference of the circular object (S1120); changing, in response to a first drag input in a central direction or external direction of the circular object being received (S1130-Y), the at least one content mapped to the circumference of the circular object (S1140); and reproducing, in response to a second drag input along the circumference of the circular object being received (S1150-Y), the content mapped to the circular object according to a touch position by the second drag input (S1160).

The mapping may include, in response to a third drag input in a central direction of the circular object being received, mapping the at least one content to the circumference of the circular object.

The content searching method may further include displaying information related to the at least one content mapped to the circumference of the circular object on the circumference of the circular object.

The content searching method may further include, in response to the second drag input along the circumference of the circular object being received, displaying an image of a content corresponding to a touch position by the second drag input.

The content searching method may further include, in response to the at least one content mapped to the circumference of the circular object being changed, displaying information related to the at least one content mapped to the circumference of the circular object on the circumference of the circular object.

Furthermore, the step of changing may include, in response to the first drag input in the central direction of the circular object being received, changing the at least one content mapped to the circumference of the circular object to another content by a same artist as the content currently being reproduced.

The another content may be mapped to the circumference of the circular object in an order of when the content was produced.

The step of changing may include, in response to the first drag input in the external direction of the circular object being received, changing the at least one content mapped to the circumference of the circular object to the content that was mapped to the circumference of the circular object at the previous step.

The changing may include, in response to the first drag input in the external direction of the circular object being received, changing the at least one content mapped to the circumference of the circular object to another content of a similar genre as the content currently being reproduced.

The changing may include, in response to the first drag input in the central direction of the circular object being received, changing the at least one content mapped to the circumference of the circular object to another content belonging to a higher layer than the content currently being reproduced, and, in response to the first drag input in the external direction of the circular object being received, changing the at least one content mapped to the circumference of the circular object to another content belonging to a lower layer than the content currently being reproduced.

The content searching method may further include, in response to a tap input being received, displaying a menu object related to the content currently being reproduced.

The menu object may include at least one of a menu item for reproducing the content currently being reproduced in an external apparatus and a menu item for searching a video related to the content currently being reproduced.

Although the object is a circular object according to one or more exemplary embodiments, it will be understood by one of ordinary skill that the object may have a different shape, such as, as non-limiting examples, polygons, such as a square, a rectangle, and a triangle, curved shapes, such as an oval, or a combination of the two. In this case, a perimeter or portion of the perimeter of the object may be substituted for the above-described circumference of the circular object.

Further, although an input is a touch input according to one or more exemplary embodiments, it will be understood by one of ordinary skill that the input may be various other types of inputs, such as, as a non-limiting example, a click or drag input of a peripheral device such as a mouse.

The aforementioned content searching method of the content searching apparatus may be embodied as a program executable by a processor, and the program may be stored in a non-transitory computer readable medium.

A non-transitory computer readable medium refers to a computer readable medium that stores data semi-permanently and not for a short period of time such as a register, cache, memory, and the like. The aforementioned various applications or programs may be stored in a non-transitory computer readable medium such as a CD, a DVD, a hard disk, a Blu-ray disk, a USB stick, a memory card, and a ROM.

## Claims

1. A content searching method comprising:
displaying a circular object;
mapping at least one content to a circumference of the circular object;
changing, in response to a first drag input in a central direction or external direction of the circular object being received, the at least one content mapped to the circumference of the circular object; and
selecting, in response to a second drag input along the circumference of the circular object being received, the content mapped to the circumference of the circular object based on a position of the second drag input.

2. The method according to claim 1, wherein the mapping comprises mapping, in response to a third drag input in the central direction of the circular object being received, the at least one content to the circumference of the circular object.

3. The method according to claim 1 or 2, further comprising displaying information corresponding to the mapped at least one content on the circumference of the circular object.

4. The method according to anyone of claims 1 to 3, further comprising displaying, in response to the second drag input along the circumference of the circular object being received, an image of a content corresponding to the position of the second drag input.

5. The method according to anyone of claims 1 to 4, further comprising displaying, in response to the at least one content mapped to the circumference of the circular object being changed, information corresponding to the changed at least one content on the circumference of the circular object.

6. The method according to anyone of claims 1 to 5, wherein the changing comprises changing, in response to the first drag input in the central direction of the circular object being received, the at least one content mapped to the circumference of the circular object to another content having a same artist as content currently being reproduced.

7. The method according to claim 6, wherein the another content is mapped to the circumference of the circular object based on an order of content production.

8. The method according to anyone of claims 1 to 5, wherein the changing comprises changing, in response to the first drag input in the external direction of the circular object being received, the at least one content mapped to the circumference of the circular object to a content that was mapped to the circumference of the circular object at a previous step.

9. The method according to anyone of claims 1 to 5, wherein the changing comprises changing, in response to the first drag input in the external direction of the circular object being received, the at least one content mapped to the circumference of the circular object to another content having a similar genre as content currently being reproduced.

10. The method according to anyone of claims 1 to 5, wherein the changing comprises:
changing, in response to the first drag input in the central direction of the circular object being received, the at least one content mapped to the circumference of the circular object to another content belonging to a higher level than content currently being reproduced; and
changing, in response to the first drag input in the external direction of the circular object being received, the at least one content mapped to the circumference of the circular object to another content belonging to a lower level than the content currently being reproduced.

11. The method according to anyone of claims 1 to 10, further comprising displaying, in response to a tap input being received, a menu object related to content currently being reproduced.

12. The method according to claim 11, wherein the menu object comprises at least one of a menu item for reproducing the content currently being reproduced in the external apparatus and a menu item for searching a video related to the content currently being reproduced.

13. A content searching apparatus (100) comprising:
a display (no) configured to display a circular object (20);
a touch screen (120) configured to receive a drag input corresponding to the circular object; and
a controller (130) configured to map at least one content to a circumference of the circular object, to change, in response to a first drag input in a central direction or external direction of the circular object being received through the touch screen, the at least one content mapped to the circumference of the circular object, and to select, in response to a second drag input along the circumference of the circular object being received through the touch screen, the content mapped to the circumference of the circular object based on a position of the second drag input.

14. The apparatus according to claim 13, wherein the controller is further configured to map, in response to a third drag input in the central direction of the circular object being received, the at least one content to the circumference of the circular object.

15. The apparatus according to claim 13 or 14, wherein the controller is further configured to control the display to display information corresponding to the mapped at least one content on the circumference of the circular object.

## Patentansprüche

1. Inhaltssuchverfahren, das Folgendes beinhaltet:
Anzeigen eines kreisförmigen Objekts;
Zuordnen von mindestens einem Inhalt auf einen Umfang des kreisförmigen Objekts;
Ändern, als Reaktion auf das Empfangen einer ersten Ziehen-Eingabe in einer zentralen Richtung oder externen Richtung des kreisförmigen Objekts, des mindestens einen Inhalts, der auf den Umfang des kreisförmigen Objekts zugeordnet ist; und
Auswählen, als Reaktion auf das Empfangen einer zweiten Ziehen-Eingabe entlang dem Umfang des kreisförmigen Objekts, des Inhalts, der auf den Umfang des kreisförmigen Objekts zugeordnet ist, basierend auf einer Position der zweiten Ziehen-Eingabe.

2. Verfahren gemäß Anspruch 1, wobei das Zuordnen das Zuordnen, als Reaktion auf das Empfangen einer dritten Ziehen-Eingabe in der zentralen Richtung des kreisförmigen Objekts, des mindestens einen Inhalts auf den Umfang des kreisförmigen Objekts beinhaltet.

3. Verfahren gemäß Anspruch 1 oder 2, das ferner das Anzeigen von Informationen entsprechend dem zugeordneten mindestens einen Inhalt auf dem Umfang des kreisförmigen Objekts beinhaltet.

4. Verfahren gemäß einem der Ansprüche 1 bis 3, das ferner das Anzeigen, als Reaktion auf das Empfangen der zweiten Ziehen-Eingabe entlang dem Umfang des kreisförmigen Objekts, eines Bilds eines Inhalts entsprechend der Position der zweiten Ziehen-Eingabe beinhaltet.

5. Verfahren gemäß einem der Ansprüche 1 bis 4, das ferner das Anzeigen, als Reaktion auf das Ändern des mindestens einen Inhalts, der auf den Umfang des kreisförmigen Objekts zugeordnet ist, von Informationen entsprechend dem geänderten mindestens einen Inhalt auf dem Umfang des kreisförmigen Objekts beinhaltet.

6. Verfahren gemäß einem der Ansprüche 1 bis 5, wobei das Ändern, als Reaktion auf das Empfangen der ersten Ziehen-Eingabe in der zentralen Richtung des kreisförmigen Objekts, das Ändern des mindestens einen Inhalts, der auf den Umfang des kreisförmigen Objekts zugeordnet ist, auf einen anderen Inhalt, der einen gleichen Künstler wie der aktuell wiedergegebene Inhalt hat, beinhaltet.

7. Verfahren gemäß Anspruch 6, wobei der andere Inhalt auf den Umfang des kreisförmigen Objekts basierend auf einer Reihenfolge der Inhaltsproduktion zugeordnet ist.

8. Verfahren gemäß einem der Ansprüche 1 bis 5, wobei das Ändern, als Reaktion auf das Empfangen der ersten Ziehen-Eingabe in der externen Richtung des kreisförmigen Objekts, das Ändern des mindestens einen Inhalts, der auf den Umfang des kreisförmigen Objekts zugeordnet ist, auf einen Inhalt, der in einem vorangegangenen Schritt auf den Umfang des kreisförmigen Objekts zugeordnet war, beinhaltet.

9. Verfahren gemäß einem der Ansprüche 1 bis 5, wobei das Ändern, als Reaktion auf das Empfangen der ersten Ziehen-Eingabe in der externen Richtung des kreisförmigen Objekts, das Ändern des mindestens einen Inhalts, der auf den Umfang des kreisförmigen Objekts zugeordnet ist, auf einen anderen Inhalt, der ein gleiches Genre wie der aktuell wiedergegebene Inhalt hat, beinhaltet.

10. Verfahren gemäß einem der Ansprüche 1 bis 5, wobei das Ändern Folgendes beinhaltet:
Ändern, als Reaktion auf das Empfangen der ersten Ziehen-Eingabe in der zentralen Richtung des kreisförmigen Objekts, des mindestens einen Inhalts, der auf den Umfang des kreisförmigen Objekts zugeordnet ist, auf einen anderen Inhalt, der zu einer höheren Ebene als aktuell wiedergegebener Inhalt gehört; und
Ändern, als Reaktion auf das Empfangen der ersten Ziehen-Eingabe in der externen Richtung des kreisförmigen Objekts, des mindestens einen Inhalts, der auf den Umfang des kreisförmigen Objekts zugeordnet ist, auf einen anderen Inhalt, der zu einer niedrigeren Ebene als der aktuell wiedergegebene Inhalt gehört.

11. Verfahren gemäß einem der Ansprüche 1 bis 10, das ferner das Anzeigen, als Reaktion auf das Empfangen einer Antipp-Eingabe, eines Menüobjekts bezogen auf aktuell wiedergegebenen Inhalt beinhaltet.

12. Verfahren gemäß Anspruch 11, wobei das Menüobjekt mindestens eines eines Menüelements zum Wiedergeben des aktuell wiedergegebenen Inhalts in der externen Vorrichtung und eines Menüelements zum Suchen eines Videos bezogen auf den aktuell wiedergegebenen Inhalt beinhaltet.

13. Inhaltssuchvorrichtung (100), die Folgendes beinhaltet:
eine Anzeige (110), die zum Anzeigen eines kreisförmigen Objekts (20) konfiguriert ist; einen Berührungsbildschirm (120), der zum Empfangen einer Ziehen-Eingabe entsprechend dem kreisförmigen Objekt konfiguriert ist; und
eine Steuereinheit (130), die zum Zuordnen von mindestens einem Inhalt auf einen Umfang des kreisförmigen Objekts, zum Ändern, als Reaktion auf das Empfangen über den Berührungsbildschirm einer ersten Ziehen-Eingabe in einer zentralen Richtung oder externen Richtung des kreisförmigen Objekts, des mindestens einen Inhalts, der auf den Umfang des kreisförmigen Objekts zugeordnet ist, und zum Auswählen, als Reaktion auf das Empfangen über den Berührungsbildschirm einer zweiten Ziehen-Eingabe entlang dem Umfang des kreisförmigen Objekts, des Inhalts, der auf den Umfang des kreisförmigen Objekts zugeordnet ist, basierend auf einer Position der zweiten Ziehen-Eingabe, konfiguriert ist.

14. Vorrichtung gemäß Anspruch 13, wobei die Steuereinheit ferner zum Zuordnen, als Reaktion auf das Empfangen einer dritten Ziehen-Eingabe in der zentralen Richtung des kreisförmigen Objekts, des mindestens einen Inhalts auf den Umfang des kreisförmigen Objekts konfiguriert ist.

15. Vorrichtung gemäß Anspruch 13 oder 14, wobei die Steuereinheit ferner zum Steuern der Anzeige zum Anzeigen von Informationen entsprechend dem zugeordneten mindestens einen Inhalt auf dem Umfang des kreisförmigen Objekts konfiguriert ist.

## Revendications

1. Procédé de recherche de contenu comportant les étapes consistant à :
afficher un objet circulaire ;
mapper au moins un contenu sur une circonférence de l'objet circulaire ;
changer, en réponse à une première entrée de glissement dans une direction centrale ou une direction externe de l'objet circulaire ayant été reçue, ledit au moins un contenu mappé sur la circonférence de l'objet circulaire ; et
sélectionner, en réponse à une deuxième entrée de glissement le long de la circonférence de l'objet circulaire ayant été reçue, le contenu mappé sur la circonférence de l'objet circulaire en fonction d'une position de la deuxième entrée de glissement.

2. Procédé selon la revendication 1, dans lequel l'étape consistant à mapper comporte l'étape consistant à mapper, en réponse à une troisième entrée de glissement dans la direction centrale de l'objet circulaire ayant été reçue, ledit au moins un contenu sur la circonférence de l'objet circulaire.

3. Procédé selon la revendication 1 ou la revendication 2, comportant par ailleurs l'étape consistant à afficher des informations qui correspondent audit au moins un contenu mappé sur la circonférence de l'objet circulaire.

4. Procédé selon l'une quelconque des revendications 1 à 3, comportant par ailleurs l'étape consistant à afficher, en réponse à la deuxième entrée de glissement le long de la circonférence de l'objet circulaire ayant été reçue, une image d'un contenu qui correspond à la position de la deuxième entrée de glissement.

5. Procédé selon l'une quelconque des revendications 1 à 4, comportant par ailleurs l'étape consistant à afficher, en réponse audit au moins un contenu mappé sur la circonférence de l'objet circulaire ayant été changé, des informations qui correspondent audit au moins un contenu changé sur la circonférence de l'objet circulaire.

6. Procédé selon l'une quelconque des revendications 1 à 5, dans lequel l'étape consistant à changer comporte l'étape consistant à changer, en réponse à la première entrée de glissement dans la direction centrale de l'objet circulaire ayant été reçue, ledit au moins un contenu mappé sur la circonférence de l'objet circulaire en un autre contenu ayant un même artiste comme contenu actuellement en cours de reproduction.

7. Procédé selon la revendication 6, dans lequel ledit un autre contenu est mappé sur la circonférence de l'objet circulaire en fonction d'un ordre de production de contenu.

8. Procédé selon l'une quelconque des revendications 1 à 5, dans lequel l'étape consistant à changer comporte l'étape consistant à changer, en réponse à la première entrée de glissement dans la direction externe de l'objet circulaire ayant été reçue, ledit au moins un contenu mappé sur la circonférence de l'objet circulaire en un contenu qui a été mappé sur la circonférence de l'objet circulaire au cours d'une étape précédente.

9. Procédé selon l'une quelconque des revendications 1 à 5, dans lequel l'étape consistant à changer comporte l'étape consistant à changer, en réponse à la première entrée de glissement dans la direction externe de l'objet circulaire ayant été reçue, ledit au moins un contenu mappé sur la circonférence de l'objet circulaire en un autre contenu ayant un genre similaire au contenu actuellement en cours de reproduction.

10. Procédé selon l'une quelconque des revendications 1 à 5, dans lequel l'étape consistant à changer comporte les étapes consistant à :
changer, en réponse à la première entrée de glissement dans la direction centrale de l'objet circulaire ayant été reçue, ledit au moins un contenu mappé sur la circonférence de l'objet circulaire en un autre contenu appartenant à un niveau supérieur par rapport au contenu actuellement en cours de reproduction ; et
changer, en réponse à la première entrée de glissement dans la direction externe de l'objet circulaire ayant été reçue, ledit au moins un contenu mappé sur la circonférence de l'objet circulaire en un autre contenu appartenant à un niveau inférieur par rapport au contenu actuellement en cours de reproduction.

11. Procédé selon l'une quelconque des revendications 1 à 10, comportant par ailleurs l'étape consistant à afficher, en réponse à une entrée de tapotement ayant été reçue, un objet de menu se rapportant au contenu actuellement en cours de reproduction.

12. Procédé selon la revendication 11, dans lequel l'objet de menu comporte au moins l'un parmi un élément de menu servant à reproduire le contenu actuellement en cours de reproduction dans l'appareil externe et un élément de menu servant à chercher un clip vidéo se rapportant au contenu actuellement en cours de reproduction.

13. Appareil de recherche de contenu (100) comportant :
un dispositif d'affichage (110) configuré pour afficher un objet circulaire (20) ;
un écran tactile (120) configuré pour recevoir une entrée de glissement qui correspond à l'objet circulaire ; et
un dispositif de commande (130) configuré pour mapper au moins un contenu sur une circonférence de l'objet circulaire, pour changer, en réponse à une première entrée de glissement dans une direction centrale ou une direction externe de l'objet circulaire ayant été reçue par le biais de l'écran tactile, ledit au moins un contenu mappé sur la circonférence de l'objet circulaire, et pour sélectionner, en réponse à une deuxième entrée de glissement le long de la circonférence de l'objet circulaire ayant été reçue par le biais de l'écran tactile, le contenu mappé sur la circonférence de l'objet circulaire en fonction d'une position de la deuxième entrée de glissement.

14. Appareil selon la revendication 13, dans lequel le dispositif de commande est par ailleurs configuré pour mapper, en réponse à une troisième entrée de glissement dans la direction centrale de l'objet circulaire ayant été reçue, ledit au moins un contenu sur la circonférence de l'objet circulaire.

15. Appareil selon la revendication 13 ou la revendication 14, dans lequel le dispositif de commande est par ailleurs configuré pour commander le dispositif d'affichage pour afficher des informations qui correspondent audit au moins un contenu mappé sur la circonférence de l'objet circulaire.
